Europäisches Patentamt

European Patent Office

Office européen des brevets

(19)

(11) EP 1 234 867 A2

(12) EUROPEAN PATENT APPLICATION

(43) Date of publication:
28.08.2002 Bulletin 2002/35

(51) Int Cl.⁷: C10K 1/34

(21) Application number: 02003935.0

(22) Date of filing: 21.02.2002

(84) Designated Contracting States:
AT BE CH CY DE DK ES FI FR GB GR IE IT LI LU
MC NL PT SE TR
Designated Extension States:
AL LT LV MK RO SI

(30) Priority: 21.02.2001 US 270396 P

(71) Applicants:
• Texaco Development Corporation
San Ramon, California 94583-4289 (US)
• Texaco Inc.
San Ramon, California 94583-4289 (US)

(72) Inventors:
• Wallace, Paul S.
Katy, Texas 77450 (US)
• Johnson, Kay A.
Missouri City, Texas 77459 (US)

(74) Representative: Eddowes, Simon
Urquhart-Dykes & Lord,
30 Welbeck Street
London W1G 8ER (GB)

(54) **Utilization of COS hydrolysis in high pressure gasification**

(57) The high pressure syngas product of a gasifier is routed first to a high pressure absorber unit that removes most of the $H_2S$ and some of the $CO_2$ from the syngas. The syngas is then released through an expander to reduce the pressure of the syngas and simultaneously generate electricity. Steam is then injected into the syngas as a reactant in the subsequent COS hydrolysis step, converting the COS to $H_2S$. After hydrolysis, the syngas is routed to a reabsorber where the remainder of the $H_2S$ and $CO_2$ are removed. Sweet syngas can then be sent to a combustion turbine for use as a fuel source.

FIG. 1

## Description

The present invention relates to a process for providing synthesis gas (syngas), in particular the removal of sulphur-containing compounds for the syngas prior to its further use.

Integrated gasification and power generation systems are used throughout the world to generate power in a combustion turbine using the gasification products of a fuel source. Gasification is commonly used as a means to convert low value hydrocarbons that contain high levels of sulfur, such as coal, coke, and vacuum residue, into clean burning combustion turbine fuel. If these feeds were not gasified prior to being combusted, they would otherwise emit high levels of environmentally harmful gases, such as SOx, NOx and $CO_2$. Using gasification technology, low value hydrocarbon fuels can achieve emission rates that are comparable to those of natural gas fed combustion turbines.

A raw synthesis gas or syngas fuel gas stream, generally comprising $H_2$, CO, $CO_2$, and $H_2O$, is produced by the partial oxidation reaction, or gasification, of a hydrocarbonaceous fuel with a free-oxygen containing gas, typically in the presence of a temperature moderator, in a quench gasification reactor. The syngas produced is cooled by quenching in water to produce a stream of quenched, saturated syngas at a temperature typically in the range of about 450°F to 550°F and at a typical pressure of about 700 to 1500 psig. A more detailed description of one such process appears in U.S. Pat. No. 5,345,756, to Jahnke et al, which is incorporated herein by reference. To make the gasification process more efficient, the process is typically operated at high pressure (1000 - 1500 psig). At high pressure the gasification process generates waste heat at high temperatures, making the syngas useful as a heat source for steam generation and other applications. Furthermore, the greater the efficiency of the gasification process, the lower the overall emissions because less fuel is required to generate the same amount of power.

When hydrocarbons are gasified, the sulfur in the fuel is converted to $H_2S$ and COS. The syngas is generally purified in an acid gas removal unit employing a physical or chemical solvent to remove $H_2S$ and COS from the gas stream. The purified syngas is then fed as fuel gas to the combustor of a gas turbine with a temperature moderator such as nitrogen. The combustion products are then expanded through a turbine which is attached to a generator to make power, and the waste heat of the combustion products is further used to make steam that in turn generates additional power in a steam turbine.

Removing $H_2S$ from the syngas is relatively easy when using conventional physical and chemical solvents. COS, on the other hand, is more difficult to remove. Therefore, COS hydrolysis technology is used. COS hydrolysis converts COS to $H_2S$ in the presence of a catalyst. This is usually done prior to $H_2S$ removal for the simple reason that COS hydrolysis generates $H_2S$. The chemical reaction is as follows:

$$(1) \qquad CDS + H_2O \rightarrow CO_2 + H_2S$$

Once the COS is converted, it can be easily removed, and is commonly done so directly downstream from the gasifier. Although COS hydrolysis catalysts will work at the pressures up to 1000 psig, at higher pressures the temperature required to achieve a partial pressure of water that will facilitate the reaction is too high for the catalyst to survive.

An important component of such power generation systems is the reduction of harmful emissions, such as the aforementioned SOx, NOx and CO2 gasses, and often low emissions are essential to getting a permit to build a power generating facility. On the other hand, the use of high sulfur, low value feeds is valuable to the business of power production, but such feeds need to be used in an environmentally friendly way. Thus, it would be desirable to develop an efficient process that would operate a gasification reactor at high pressures so as to maximize the efficiency while still using a COS hydrolysis reactor so as to eliminate COS from the syngas.

The present invention is directed toward a means to use a COS hydrolysis system in conjunction with a high pressure gasification unit in an efficient manner. The high pressure syngas is routed first to a high pressure absorber unit that utilizes a physical or chemical solvent to remove most of the $H_2S$ and some of the $CO_2$ from the syngas. No attempt to remove COS at this point is required. After the high pressure absorber, the syngas is released through an expander to reduce the pressure of the syngas and simultaneously generate electricity. Steam is then injected into the syngas as a reactant in the subsequent COS hydrolysis step. Because the majority of the $H_2S$ and a significant amount of the $CO_2$ has been previously removed in the high pressure absorber, the conversion of COS to $H_2S$ is dramatically increased. After hydrolysis, the syngas is routed to a reabsorber where the remainder of the $H_2S$ and $CO_2$ are removed prior to the syngas going to the combustion turbine for use as a fuel source.

Embodiments of the present invention will now be further described, by way of example only, having reference to the accompanying drawings, in which:

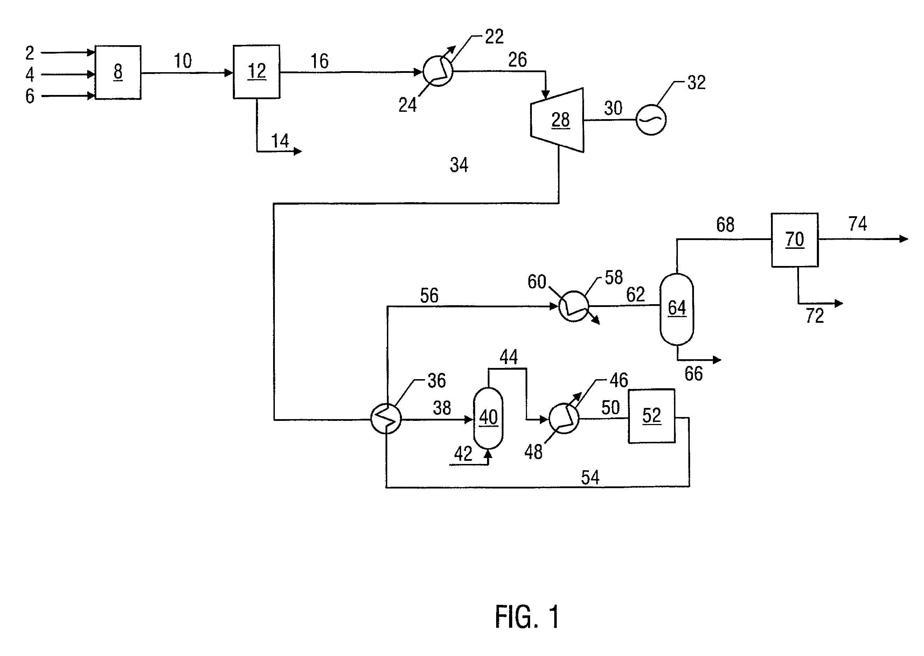

FIG. 1 is schematic representation of a process according to one embodiment of the present invention.

The present invention pertains to a novel process for the purification of the products of the partial oxidation, or gasification, of a high sulfur containing hydrocarbon feedstock. By definition, gasification reactor, partial oxidation reactor, or gasifier are used interchangeably to describe the reactor in which the partial oxidation of a feedstock takes place, converting the feedstock into synthesis gas. Partial oxidation reactors are well known in the art, as are the partial oxidation reaction conditions. See, for example, U.S. Pat. Nos. 4,328,006, 4,959,080 and 5,281,243, all incorporated herein by reference.

The feedstock to a gasifier can include pumpable hydrocarbon materials and pumpable slurries of solid carbonaceous materials, and mixtures thereof, for example, pumpable aqueous slurries of solid carbonaceous fuels are suitable feedstocks. In fact, any substantially combustible carbon-containing fluid organic material, or slurries thereof may be used as feed for a gasifier. For example, there are:

(1) pumpable slurries of solid carbonaceous fuels, such as coal, particulate carbon, petroleum coke, concentrated sewer sludge, and mixtures thereof, in a vaporizable liquid carrier, such as water, liquid $CO_2$, liquid hydrocarbon fuel, and mixtures thereof;
(2) suitable liquid hydrocarbon fuel feedstocks, such as liquefied petroleum gas, petroleum distillates and residua, gasoline, naphtha, kerosine, crude petroleum, asphalt, gas oil, residual oil, tar sand oil and shale oil, coal derived oil, aromatic hydrocarbons (such as benzene, toluene, xylene fractions), coal tar, cycle gas oil from fluid-catalytic-cracking operations, furfural extract of coker gas oil, and mixtures thereof; and
(3) oxygenated hydrocarbonaceous organic materials including carbohydrates, cellulosic materials, aldehydes, organic acids, alcohols, ketones, oxygenated fuel oil, waste liquids and by-products from chemical processes containing oxygenated hydrocarbonaceous organic materials, and mixtures thereof.

Gaseous hydrocarbonaceous fuels may also be burned in the partial oxidation gasifier alone or along with the fluid hydrocarbonaceous fuel includes vaporized liquid natural gas, refinery off-gas, $C_1$ - $C_4$ hydrocarbonaceous gases, and waste carbon-containing gases from chemical processes. The feedstocks to which the instant application is most applicable to, though, are those that contain at least some sulfur that will be converted to COS in the gasifier.

The feedstock of a gasification reactor is reacted with oxygen containing gas, such as air, enriched air, or pure oxygen, and a temperature modifier, such as water or steam, in a gasification reactor to obtain the synthesis gas. The term oxygen containing gas as used herein means air, oxygen-enriched air, i.e. greater than about 21 mole % $O_2$, and substantially pure oxygen, i.e. greater than about 90% mole oxygen (the remainder usually comprising $N_2$). The primary function of the oxygen containing gas is used to partially oxidize the carbon in the feedstock into primarily carbon monoxide and hydrogen gas.

The temperature moderator is used to control the temperature in the reaction zone of the gasifier, and is usually dependent on the carbon-to-hydrogen ratios of the feedstock and the oxygen content of the oxidant stream. Water or steam is the preferred temperature moderator. Other temperature moderators include $CO_2$-rich gas, nitrogen, and recycled synthesis gas. A temperature moderator may be injected into the gasifier in conjunction with liquid hydrocarbon fuels or substantially pure oxygen. Alternatively, the temperature moderator may be introduced into the reaction zone of the gas generator by way of a separate conduit in the feed injector. Together, the oxygen and the temperature modifier can impact the composition of the synthesis gas, but control of the gasification reactor is outside the scope of the present invention.

Partial oxidation reactions utilize a limited amount of oxygen with hydrocarbon feedstocks to produce hydrogen and carbon monoxide (i.e. synthesis gas or syngas), as shown in equation (2) for a straight chain hydrocarbon, instead of water and carbon dioxide as occurs in the case of complete oxidation:

$$(2) \qquad ((n+2)/2)O_2 + CH_3(CH_2)_nCH_3 \rightleftarrows (n+3)H_2 + (n+2)CO$$

In actuality, this reaction is difficult to carry out as written. There will always be some production of water and carbon dioxide via the water gas shift reaction (3):

$$(3) \qquad H_2O + CO \rightleftarrows H_2 + CO_2$$

The partial oxidation reaction is conducted under reaction conditions that are sufficient to convert a desired amount of carbon-containing feedstock to synthesis gas or syngas. Reaction temperatures typically range from about 1,700° F (930° C) to about 3,000° F (1650° C), and more typically in the range of about 2,000° F (1100° C) to about 2,800° F (1540° C). Pressures can range from about 0 psig (100 kPa) to about 3660 psig (25,000 kPa), but are more typically in the range of about 700 psig (5000 kPa) to about 1500 psig (10,500 kPa).

The synthesis gas, or syngas, product composition will vary depending upon the composition of the feedstock and the reaction conditions. Syngas generally includes CO, $H_2$, steam, $CO_2$, $H_2S$, COS, $CH_4$, $NH_3$, $N_2$, and, if present in the feed to the partial oxidation reactor at high enough concentrations, less readily oxidizable volatile metals, such as lead, zinc, and cadmium.

Ash-containing feedstocks frequently produce non-gaseous byproducts that include coarse slag and other materials, such as char, fine carbon particles, and inorganic ash. The coarse slag and inorganic ash are frequently composed of metals such as iron, nickel, sodium, vanadium, potassium, aluminum, calcium, silicon, and the oxides and sulfides of these metals. Much of the finer material is entrained in the syngas product stream.

The coarse slag produced in partial oxidation reactors is commonly removed from the syngas in molten form from the quench section of a gasifier. In the quench section of the gasifier, the synthesis gas product of the gasification reaction is cooled by being passed through a pool of quench water in a quench chamber immediately below the gasifier. Slag is cooled and collects in this quench chamber, from which it and other particulate materials that accumulate in the quench chamber can be discharged from the gasification process by use of a lockhopper or other suitable means. The syngas exiting the quench chamber can be passed through an aqueous scrubber for further removal of particulates before further processing. Quench water is continuously removed and added to the quench chamber so as to maintain a constant level of quench water in the quench chamber of the gasification reactor.

The particulate free synthesis gas may then be treated in a high pressure absorber to remove the most of the acid gas components, particularly $H_2S$ and $CO_2$. This is generally done by use of conventional acid gas removal techniques involving physical or chemical solvents. Solvent fluids containing amines, such as MDEA, can be used to remove the most common acid gas, hydrogen sulfide, but also removes other acid gases, including $CO_2$. The fluids may be lower monohydric alcohols, such as methanol, or polyhydric alcohols such as ethylene glycol and the like. The fluid may also contain an amine such as diethanolamine, methanol, N-methyl-pyrrolidone, or a dimethyl ether of polyethylene glycol. Physical solvents such as dimethyl ether of polyethlene glycol (available commercially as SELEXOL™) and methanol (available commercially as RECTISOL™) may also be used. Physical solvents are typically used because they operate better at high pressure. The synthesis gas is contacted with the physical solvent in an acid gas removal contactor which may be of any type known to the art, including trays or a packed column. Operation of such an acid removal contactor should be known to one of skill in the art. The syngas usually exits the acid gas removal facility at a pressure just slightly less than that of the gasification reactor, about 700 psig (5000 kPa) to about 1500 psig (10,500 kPa). The syngas temperature is typically between about 50°F (10°C) to about 210°F (100°C), more typically between about 70°F (20°C) and about 125°F (50°C).

After being processed in the high pressure absorber, the syngas is expanded so as to produce power while reducing the pressure of the syngas to about 400 psig (2850 kPa). The syngas mixture entering the expander is preferably heated to a temperature of about 300°F. A large amount of power can be extracted from the expanding volume of the hot syngas, thereby improving the efficiency of the overall power production cycle.

After being expanded, the syngas is mixed with steam, a reactant in the COS hydrolysis reactor, and heated to the temperature required for the COS hydrolysis reaction, about 300°F. The syngas is now at a significantly lower pressure than at the time it left the gasifier, and thus the temperatures required to achieve a partial pressure of water that will facilitate the reaction will not damage the COS hydrolysis catalyst. In the COS hydrolysis reactor, the COS is converted to $H_2S$. Because a majority of the $H_2S$ and a significant amount of the $CO_2$ was removed from the syngas in the high pressure absorber, a higher conversion of COS to $H_2S$ can be achieved. Thus, much more COS is converted to $H_2S$ than if a COS hydrolysis step was utilized before the high pressure absorber.

The COS hydrolysis catalyst can be any type catalyst known in the art, such as a chemical and physical solvent. Sykes, U.S. Pat. No. 3,965,244, Bozzelli, et al. U.S. Pat. No. 4,100,256, and U.S. Pat. No. 4,112,049, all teach the use of chemical solvents to hydrolize COS. The prime examples of chemical solvents are aqueous solutions of primary and secondary amines such as monoethanol amine (MEA) and diethanol amine (DEA), respectively. Physical solvents can also be used in place of these chemical solvents. Physical solvents can absorb more gas under pressure than chemical solvents. Physical solvents such as polyethylene glycol dimethyl ether, sold under the tradename SELEXOL™, and cold methanol, sold under the tradename RECTISOL™, remove acid gases based on the principle of physical absorption. COS hydrolysis can also be effected in the gas phase over a suitable catalyst. Catalysts such as Pt on $Al_2O_3$ have been employed for this hydrolysis, and is the preferable process for use in the present invention.

The hydrolysis reactor effluent is then cooled to about 100°F, and sent to a knockout drum to separate any condensed liquids from the syngas. The syngas, which is preferably at a pressure of about 380 psig and a temperature of about 100°F, is then routed to a reabsorber where the remainder of the $H_2S$ and $CO_2$ is removed. The reabsorber, much like the high pressure absorber, can be any type known in the art, and may actually operate in a very similar nature to the high-pressure absorber system. Finally, substantially pure syngas is produced, and may be sent to, among other things, a combustion turbine for power production.

Referring now to FIG. 1, hydrocarbon feed 2, oxygen containing gas 4 and temperature modifier 6 are fed to a gasification reactor system 8. The sour syngas product 10 is routed to a high pressure absorber unit 12, where a substantial portion of the $H_2S$ and $CO_2$ in the syngas is removed, producing a sulfur stream 14. The sweetened syngas 16 is then sent to steam heater 22, where it is heated to about 300°F using steam 24. The heated syngas is then processed in expander 28, which turns shaft 30 that produces power 32. The syngas product 34 is now at a pressure of about 400 psig.

Syngas 34 is then sent through a feed/effluent exchanger 36, where it exchanges heat with the effluent 54 of the COS hydrolysis reactor 52. Syngas 34 is heated in exchanger 36, and is then sent to drum 40 where it is mixed with steam 42, a reactant in the COS hydrolysis reaction. The mixture 44 is heated in exchanger 46 to about 300°F using steam 48 as the heat source. The heated mixture 50 is then processed in COS hydrolysis reactor 52, where the COS is converted to $H_2S$ and $CO_2$. The converted syngas 54 then is cooled in feed/effluent exchanger 36 to a temperature of about 170°F, and then is cooled further in trim cooler 58 to about 100°F using cooling water. The cooled syngas 62 is then processed in a knockout drum so that condensed liquids can be removed from the syngas. The gaseous syngas 68 is then sent reabsorber 70, where the remaining $H_2S$ and $CO_2$ in the syngas is removed, producing sulfur stream 72. Finally, sweet syngas 74 is produced, and can then be utilized in any downstream process, most preferably for power production in the combustor of a gas turbine.

The above illustrative embodiments are intended to serve as simplified schematic diagrams of potential embodiments of the present invention. One of ordinary skill in the art of chemical engineering should understand and appreciate that specific details of any particular embodiment may be different and will depend upon the location and needs of the system under consideration. All such layouts, schematic alternatives, and embodiments capable of achieving the present invention are considered to be within the capabilities of a person having skill in the art and thus within the scope of the present invention.

While the apparatus, compounds and methods of this invention have been described in terms of preferred embodiments, it will be apparent to those of skill in the art that variations may be applied to the process described herein without departing from the concept and scope of the invention. All such similar substitutes and modifications apparent to those skilled in the art are deemed to be within the scope and concept of the invention.

**Claims**

1. A process comprising:

   providing a stream of syngas;
   removing a first portion of acid gasses from the syngas;
   expanding the syngas;
   processing the syngas in a COS hydrolysis unit; and
   removing a second portion of acid gasses from the syngas.

2. The process of claim 1 wherein the syngas is produced in a gasification reactor.

3. The process of claim 2 wherein the syngas is produced in a gasification reactor by the partial oxidation of a carbonaceous feedstock.

4. The process of claim 3 wherein the carbonaceous comprises a pumpable slurry of solid carbonaceous fuels, a liquid hydrocarbon fuel, oxygenated hydrocarbonaceous organic material, or a gaseous hydrocarbonaceous fuel.

5. The process of any preceding claim wherein energy from the syngas expansion step is used to produce power.

6. The process of any preceding claim wherein the syngas comprises CO, H2, CO2, H2S, and COS.

7. The process of any preceding claim wherein the first portion of acid gasses comprises H2S and CO2.

8. The process of any preceding claim wherein the COS hydrolysis unit converts COS present in the syngas into H2S and CO2.

9. The process of any preceding claim wherein the second portion of acid gasses comprises H2S and CO2.

10. The process of and preceding claim wherein the first and second portions of acid gasses are removed in a high pressure absorber.

11. The process of claim 10 wherein the high pressure absorber utilizes a solvent to remove the acid gasses.

12. The process of claim 11 wherein the solvent comprises one or more amines, lower monohydric alcohols, polyhydric alcohols, ethers and combinations thereof.

13. The process of ant preceding claim wherein the syngas is mixed with steam prior to being processed in the COS hydrolysis unit.

14. The process of any prior claim wherein the COS hydrolysis unit comprises a catalyst.

15. The process of claim 14 wherein the catalyst is Pt on AL2O3.

16. The process of any preceding claim wherein the syngas is combusted in a gas turbine to produce power.

17. A process comprising:

partially oxidizing a carbonaceous feedstock in a gasification reactor, thereby producing a stream of syngas, the syngas comprising CO, H2, CO2, H2S, and COS;
removing a portion of the H2S and CO2 from the syngas;
expanding the syngas, wherein energy produced by the expansion is used to produce power;
mixing the syngas with steam;
processing the syngas in a COS hydrolysis unit, wherein the COS in the syngas is converted into H2S and CO2; and
removing a portion of the H2S and CO2 from the syngas.

18. The process of claim 17 wherein the syngas is combusted in a gas turbine to produce power.

FIG. 1